# EUROPÄISCHE PATENTSCHRIFT

(11) **EP 1 493 519 B1**
(45) Veröffentlichungstag und Bekanntmachung des Hinweises auf die Patenterteilung: **02.04.2008**
(21) Anmeldenummer: 04014274.7
(22) Anmeldetag: 18.06.2004
(51) Int. Cl.: B23B 31/20, B23B 31/30

(54) **Spannvorrichtung, insbesondere für Wechselwerkzeuge**
Clamping device, specially for exchangeable tools
Dispositif de serrage, en particulier pour outils échangeables

(30) Priorität: 04.07.2003 DE 10330131
(43) Veröffentlichungstag der Anmeldung: 05.01.2005
(73) Patentinhaber: ZEITLAUF GmbH antriebstechnik & Co.KG, 91207 Lauf/Pegnitz (DE)
(72) Erfinder: Grünig, Kurt, 2515 Prèles (CH)
(74) Vertreter: Hübner, Gerd

(56) Entgegenhaltungen:
- DE-A- 4 015 149
- DE-U- 20 023 140
- US-A- 3 441 297
- US-A- 4 387 906

## Beschreibung

Die Erfindung betrifft eine Spannvorrichtung, insbesondere für Wechselwerkzeuge, wie etwa für Stoßwerkzeuge von Zahnrad-Stoßmaschinen mit dem im Oberbegriff des Anspruches 1 angegebenen Merkmalen und wie z.B. aus US-A-4.387.906 bekannt ist. Die Spannvorrichtung ist im Übrigen für das Halten jedweder zylindrischer Konturen geeignet.

Spannvorrichtungen mit einer Spannhülse mit beispielsweise einer inneren zylindrischen Werkzeugaufnahme für einen Werkzeugschaft und einer Spann-Überwurfmutter, die auf die Spannhülse zum Klemmen des Werkzeugschaftes aufschraubbar sind, sind grundsätzlich aus dem offenkundig vorbenutzten Stand der Technik bekannt. Herkömmlicherweise sind zwischen Spannhülse und Überwurfmutter Keilflächen vorgesehen, mit deren Hilfe beim Verschrauben der Überwurfmutter durch Schlitze in der Spannhülse gebildete Zungen radial nach innen verlagert, um den in der Spannhülse sitzenden Werkzeugschaft zu klemmen.

Diese Art von Spannvorrichtung ist aufgrund der Schlitzung der Spannhülse für hochpräzise Einspannungen eines Wechselwerkzeuges problematisch, da oftmals zu ungenau. Davon ausgehend liegt der Erfindung die Aufgabe zugrunde, eine Spannvorrichtung in konstruktiv einfacher Weise für eine besonders präzise und stabile Klemmung von Wechselwerkzeugen tauglich zu machen.

Diese Aufgabe wird durch die im Kennzeichnungsteil des Anspruches 1 angegebenen Merkmale gelöst. Demnach ist keine mechanische, sondern eine Art direkt wirkende, hydraulische Spannung vorgesehen, indem zwischen Spannhülse und Überwurfmutter mindestens eine durch Dichtzonen fluiddicht abgeschlossene Fluidkammer gebildet ist, die mit einem viskosen Fluid gefüllt ist. Durch zunehmendes Aufschrauben der Überwurfmutter wird das Volumen der mindestens einen Fluidkammer so reduziert, dass der sich dadurch aufbauende Fluiddruck auf die Spannhülse zu deren radialer Kompression und Spannung des Werkzeugschaftes in der Werkzeugaufnahme führt. Da prinzipbedingt die Spannhülse nicht mehr in sich unterbrochen und in einzelne Zungen geteilt ist, sondern allein mit der radialen Kompression der zylindermantelförmigen Wand der Spannhülse gearbeitet wird, kann hier mit sehr engen Toleranzen eine höchst positionsgenaue und konzentrische, dabei jedoch ausreichend stabile Spannung insbesondere eines Werkzeuges vorgenommen werden.

Bevorzugte Weiterbildungen der Spannvorrichtung sind in den Unteransprüchen angegeben. Im Übrigen ergeben sich weitere Merkmale, Einzelheiten und Vorteile der Erfindung aus der nachfolgenden Beschreibung, in der ein Ausführungsbeispiel anhand der beigefügten Zeichnungen näher erläutert wird. Es zeigen:
- Fig. 1: eine Seitenansicht einer Spannvorrichtung in geschlossenem Zustand, und
- Fig. 2: eine in den wesentlichen Teilen axial geschnittene Ansicht der Spannvorrichtung gemäß Fig. 1 in geöffneter Stellung.

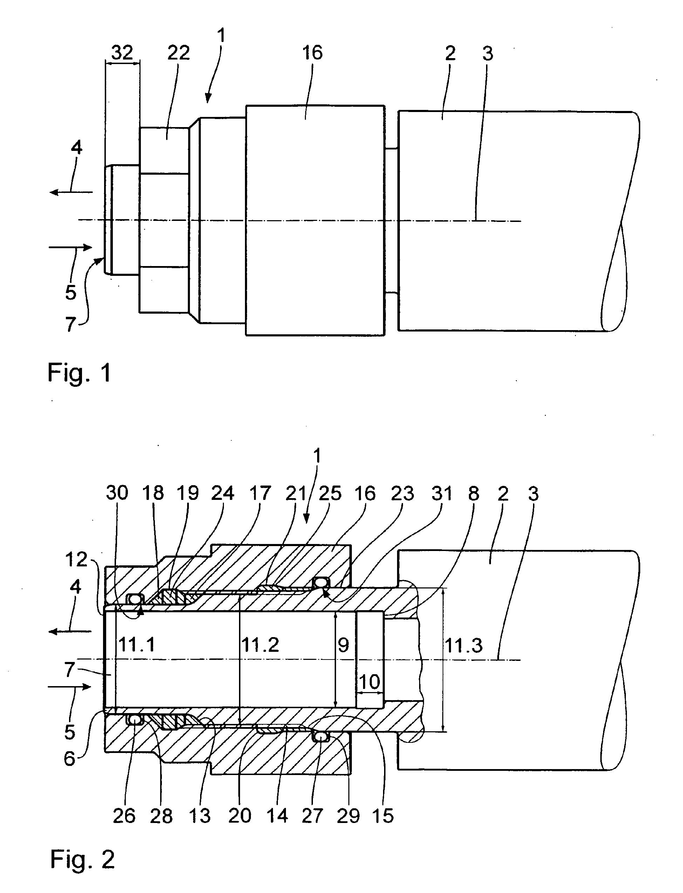

In den beiden Fig. 1 und 2 ist eine Spannvorrichtung 1 am werkstückseitigen Ende einer Antriebswelle 2 einer Bearbeitungsmaschine, wie beispielsweise einer Wälz-Stoß-Maschine zur Zahnradherstellung gezeigt. Die Antriebswelle 2 vollführt beispielsweise eine Dreh- oder Wälzbewegung um ihre Achse 3 sowie eine Stoßhub- und Rückhubbewegung 4, 5 in Axialrichtung.

Die Spannvorrichtung 1 weist eine an der Antriebswelle 2 sitzende Spannhülse 6 mit einer innenzylindrischen Werkzeugaufnahme 7 auf, in die der nicht näher dargestellte Spannschaft eines Werkzeuges - beispielsweise eines Stoßwerkzeuges zur Zahnradherstellung - einschiebbar und durch die noch näher zu beschreibende Spannvorrichtung 1 festlegbar ist. Die Werkzeugaufnahme 7 weist an ihrem werkzeugabgewandten Ende eine Anschlagschulter 8 auf, an der sich der Spannschaft des Werkzeuges bei dem Stoßhub 4 des Werkzeugs abstützen kann. Insoweit muss die Spannvorrichtung 1 im Wesentlichen für eine zur Längsachse 3 positionsgenaue Halterung des Spannwerkzeuges sorgen, nicht jedoch für eine Aufnahme der durch die Werkzeugbeaufschlagung beim Stoßvorgang auftretenden Axialkräfte. Allerdings wird für eine ausreichend hohe Klemmkraft zur Fixierung des Werkzeuges gegen die hohen, beim Vor- und Rückhub auftretenden Beschleunigungen von ca. 2000 m/sec² gesorgt.

Während der Innendurchmesser 9 der Werkzeugaufnahme 7 über ihre Länge - bis auf einen schmalen Ringbereich 10 vor der Anschlagschulter 8 - konstant ist, vergrößert sich der Außendurchmesser 11 der Spannhülse 6 stufig mit zunehmenden Abstand von dem freien Ende 12 der Spannhülse 6. Nach einem relativ dünnwandigen Anfangsbereich mit Außendurchmesser 11.1 schließt sich nach einer ersten Durchmesserstufe 13 ein Bereich mit Außendurchmesser 11.2 und einem Außengewinde 14 an, dem eine zweite Durchmesserstufe 15 mit anschließend einem Außendurchmesser 11.3 folgt. Die drei Durchmesserbereiche dritteln die axiale Länge der Spannhülse 6 im Wesentlichen.

Auf das Außengewinde 14 der Spannhülse 6 ist eine Spann-Überwurfmutter 16 mit ihrem etwa zentral angeordneten Innengewinde 17 aufschraubbar. Analog den Durchmesserstufen der Spannhülse 6 weist die Überwurfmutter 16 an ihrem vorderen Ende einen dem dortigen Außendurchmesser 11.1 angepassten Innendurchmesser auf, der im Mikrometer-Bereich, vorzugsweise etwa 10 µm größer als der Außendurchmesser 11.1 der Spannhülse 6 ist. Etwa auf halber Länge der Spannhülse 6 vor der ersten Durchmesserstufe 13 weist die Überwurfmutter 16 eine Durchmesserstufe 18 auf, an die sich eine im Querschnitt trapezförmige Ausdrehung 19 und das Innengewinde 17 in axialer Richtung anschließen. Das Innengewinde 17 ist gegenüber dem Außengewinde 11 in axialer Richtung deutlich kürzer ausgeführt und geht in werkzeugabseitiger Richtung in eine weitere Durchmesserstufe 20 mit anschließender Ausdrehung 21 über. Damit erreicht die Überwurfmutter 16 ihren maximalen Innendurchmesser, der wiederum etwa 10 µm größer als der dortige Außendurchmesser 11.3 ist.

Die Außenkontur der Überwurfmutter 16 weist an ihrem frontseitigen Ende einen Außensechskant 22 auf, an dem ein Drehmomentschlüssel zum definierten Anziehen der Überwurfmutter 16 angreifen kann.

Durch die geschilderten Durchmesserstufen 13, 15, 18 und 20 mit den zugehörigen Ausdrehungen 19 und 22 werden zwischen der Außenseite der Spannhülse 6 und der Innenfläche 23 der Überwurfmutter 16 Fluidkammem 24, 25 gebildet, die mit einem hochviskosem Fett vollständig auch unter Durchdringung der ineinandergreifenden Gewindegänge von Außen-14 und Innengewinde 17 gefüllt sind. Das Fett ist vorzugsweise auf Mineralölbasis hergestellt und mit einem Bariumkomplex als Andickmittel sowie mit anorganischen Füllkörpern versetzt. Ein derartiges Fett wird beispielsweise von der Firma Kluber Lubrication North America LP., Londonderry, NH (USA) unter der Handelsbezeichnung "Altemp Q NB 50" in Verkehr gebracht.

Die Fluidkammern 24, 25 sind durch O-Ring-Dichtungen 26, 27, die in Ringnuten 28, 29 in der Innenfläche 23 der Überwurfmutter 16 vor deren beiden stirnseitigen Enden nach außen hin abgedichtet. Insoweit sind zwischen den O-Ring-Dichtungen 26, 27 und der jeweiligen Außenfläche der Spannhülse 6 Dichtzonen 30, 31 gebildet, die ein Austreten der Fettfüllung in den Fluidkammern 25, 26 auch bei Druckbeaufschlagung wirkungsvoll verhindern.

Zum Einspannen eines Werkzeuges in die Spannvorrichtung wird ausgehend von der in Fig. 2 gezeigten, gelösten Stellung der Überwurfmutter 16 der (nicht dargestellte) Spannschaft des Werkzeuges bis zur Anschlagschulter 8 in die Werkzeugaufnahme 7 eingeführt. Zwischen Spannschaft des Werkzeuges und Werkzeugaufnahme 7 soll eine Toleranz h4 vorliegen, um das hydraulische Spannen der Spannvorrichtung zu gewährleisten.

Nach dem Einsetzen des Werkzeugschaftes wird die Überwurfmutter 16 an ihrem Außensechskant 22 mit Hilfe eines Drehmomentschlüssels mit etwa 25 Nm zugeschraubt, wobei die vorstehende Drehmomentgrenze spätestens dann erreicht sein sollte, wenn die Überwurfmutter 16 mit einer Einschraubtiefe 32 von maximal 5 mm eingeschraubt wurde. Durch dieses Einschrauben werden die Durchmesserstufen 13, 15 von Spannhülse 6 und 8 bzw. 20 von Überwurfmutter 16 verringert, sodass dementsprechend das Volumen der Fluidkammern 24, 25 erheblich verkleinert wird. Dadurch wird innerhalb der Fettfüllung der Fluidkammern ein hoher hydrostatischer Druck aufgebaut, der zu einer radialen Kompression der Spannhülse 6 und damit zu einem Spannen des darin befindlichen Werkzeugschaftes führt.

Beim Abschrauben der Überwurfmutter 16 vergrößern sich die Fluidkammern 24, 25 wieder dementsprechend, wodurch der hydrostatische Druck und die radiale Kompression der Spannhülse 6 sich abbauen und das Werkzeug wieder freigegeben wird.

## Patentansprüche

1. Spannvorrichtung, insbesondere für Wechselwerkzeuge, wie für Stoßwerkzeuge von Zahnrad-Stoßmaschinen, umfassend
- eine Spannhülse (6) mit einer innenzylindrischen Werkzeugaufnahme (7) für einen Werkzeugschaft, und
- einer Spann-Überwurfmutter (16), die mit einem Innengewinde (17) auf einem Außengewinde (14) der Spannhülse (6) zum Spannen des Werkzeugschaftes in axialer Richtung (3) verschraubbar gelagert ist,
**gekennzeichnet durch**
- mindestens eine die Spannhülse (6) auf einer Axiallänge umgebende, zwischen Überwurfmutter (16) und Spannhülse (6) gebildete, **durch** Dichtzonen (30, 31) fluiddicht abgeschlossene Fluidkammer (24, 25), die mit einem viskosen Fluid gefüllt und **durch** zunehmendes Aufschrauben der Überwurfmutter (16) derart im Volumen reduzierbar ist, dass ein radialer Fluiddruck auf die Spannhülse (6) zu deren radialer Kompression und Spannung eines Werkzeugschaftes in der Werkzeugaufnahme (7) erzeugbar ist.

2. Spannvorrichtung nach Anspruch 1, **dadurch gekennzeichnet, dass** die mindestens eine Fluidkammer (24, 25) durch eine sich über eine begrenzte Axiallänge der Überwurfmutter (16) erstreckende Ausdrehung (19, 21) mit einem gegenüber dem Außendurchmesser (11) der Spannhülse (6) größeren Innendurchmesser gebildet ist.

3. Spannvorrichtung nach Anspruch 1 oder 2, **dadurch gekennzeichnet, dass** jeweils eine Fluidkammer (24, 25) axial vor und hinter den ineinandergreifenden Gewinden (14, 17) von Spannhülse (6) und Überwurfmutter (16) angelegt sind.

4. Spannvorrichtung nach einem der vorgenannten Ansprüche, **dadurch gekennzeichnet, dass** die mindestens eine Fluidkammer (24, 25) durch vor den axialen Enden der Überwurfmutter (16) an deren Innenfläche (23) angeordneten, die Spannhülse (6) umgreifenden Ringdichtungen (26, 27) in den Dichtzonen (30, 31) abgedichtet ist.

5. Spannvorrichtung nach einem der vorgenannten Ansprüche, **dadurch gekennzeichnet, dass** das Fluid von einem hochviskosen Fett gebildet ist.

6. Spannvorrichtung nach einem der vorgenannten Ansprüche, **dadurch gekennzeichnet, dass** die Ringspalte zwischen der Innenfläche (23) der Überwurfmutter (16) und dem Außenumfang (11) der Spannhülse (6) in den Dichtzonen (30, 31) im µm-Bereich, vorzugsweise etwa 10 µm betragen.

7. Spannvorrichtung nach einem der vorgenannten Ansprüche, **dadurch gekennzeichnet, dass** der Außendurchmesser (11) der Spannhülse (6) und der Innendurchmesser der Überwurfmutter (16) mit zunehmender Tiefe der Werkzeugaufnahme (7) abgestuft zueinander größer werden.

## Claims

1. Clamping device, especially for interchangeable tools, such as shaping tools for gear wheel shapers, comprising
- a clamping sleeve (6) having an inner-cylindrical tool holder (7) for a tool shaft, and
- a clamping union nut (16) which, by means of an internal thread (17), is screwably disposed on an external thread (14) of the clamping sleeve (6) for clamping the tool shaft in the axial direction (3),
**characterized by**
- at least one fluid chamber (24, 25) which surrounds the clamping sleeve (6) along an axial length, is formed between the union nut (16) and the clamping sleeve (6), is sealed in a fluid-tight manner by sealing zones (30, 31), is filled with a viscous fluid and the volume of which is reducable by further screwing down the union nut (16) in a way that a radial fluid pressure is generatable on the clamping sleeve (6) so as to radially compress and clamp a tool shaft in the tool holder (7).

2. Clamping device according to claim 1, **characterized in that** the at least one fluid chamber (24, 25) is formed by a cut-out portion (19, 21) which extends over a limited axial length of the union nut (16) and has a larger internal diameter with respect to the external diameter (11) of the clamping sleeve (6).

3. Clamping device according to claim 1 or 2, **characterized in that** one fluid chamber (24, 25) each is respectively disposed axially in front of and behind the interlocking threads (14, 17) of clamping sleeve (6) and union nut (16).

4. Clamping device according to one of the preceding claims, **characterized in that** the at least one fluid chamber (24, 25) is sealed by annular seals (26, 27) in the sealing zones (30, 31), which surround the clamping sleeve (6) and are disposed in front of the axial ends of the union nut (16) at the inner surface (23) thereof.

5. Clamping device according to one of the preceding claims, **characterized in that** the fluid is a highly viscous grease.

6. Clamping device according to one of the preceding claims, **characterized in that** the annular gaps in the sealing zones (30, 31) between the inner surface (23) of the union nut (16) and the outer circumference (11) of the clamping sleeve (6) are in the µm range, preferably amounting to approximately 10 µm.

7. Clamping device according to one of the preceding claims, **characterized in that** the external diameter (11) of the clamping sleeve (6) and the internal diameter of the union nut (16) gradually increase with respect to one another with increasing depth of the tool holder (7).

## Revendications

1. Dispositif de serrage, en particulier pour des outils interchangeables, comme pour des outils de percussion de machines de percussion à engrenage, comportant
- un manchon de serrage (6) avec un récepteur d'outil (7) intérieurement cylindrique pour une tige d'outil, et
- un écrou à chapeau de serrage (16), lequel est placé de façon à pouvoir être vissé sur un filetage externe (14) du manchon de serrage (6) par le biais d'un filetage interne (7), afin de serrer la tige d'outil dans le sens axial (3),
**caractérisé en ce que**
- au moins un compartiment à fluide (24, 25), entourant le manchon de serrage (6) sur une longueur axiale, formé entre l'écrou à chapeau (16) et le manchon de serrage (6), étanche aux fluides par le biais de zones d'étanchéité (30, 31), est rempli d'un liquide visqueux et dont le volume peut être réduit en vissant l'écrou à chapeau (16) de telle sorte qu'une pression de fluide peut être produite sur le manchon de serrage (6) pour sa compression radiale et le serrage d'une tige d'outil dans le récepteur d'outil (7).

2. Dispositif de serrage selon la revendication 1, **caractérisé en ce que** le compartiment à fluide (24, 25), au moins au nombre de un, est formé par un alésage (19, 21) s'étalant sur une longueur axiale limitée de l'écrou à chapeau (16) avec un diamètre interne plus grand que le diamètre externe (11) du manchon de serrage (6).

3. Dispositif de serrage selon la revendication 1 ou 2, **caractérisée en ce qu'**un compartiment à fluide (24, 25) est placé axialement, respectivement devant et derrière les filetages (14, 17) s'emboîtant du manchon de serrage (6) et de l'écrou à chapeau (16).

4. Dispositif de serrage selon l'une des revendications précédentes, **caractérisé en ce que** le compartiment à fluide (24, 25) au moins au nombre de un, est étanché dans les zones d'étanchéité (30, 31) par des joints d'étanchéité (26, 27) disposés devant les extrémités axiales de l'écrou à chapeau (16) sur la surface interne (23) de ce dernier et entourant le manchon de serrage (6).

5. Dispositif de serrage selon l'une des revendications précédentes, **caractérisé en ce que** le fluide est constitué d'une graisse hautement visqueuse.

6. Dispositif de serrage selon l'une des revendications précédentes, **caractérisé en ce que** les jeux annulaires entre la surface interne (23) de l'écrou à chapeau (16) et le périmètre externe (11) du manchon de serrage (6) dans les zones d'étanchéité, sont de l'ordre du µm, de préférence de 10 µm.

7. Dispositif de serrage selon l'une des revendications précédentes, **caractérisé en ce que**, par rapport à une profondeur croissante du récepteur d'outil (7), le diamètre externe (11) du manchon de serrage (6) et le diamètre interne de l'écrou à chapeau (16) sont graduellement plus grands.
